Europäisches Patentamt

European Patent Office

Office européen des brevets

(11) Publication number: **0 035 314**
**A1**

(19)

(11) Publication number:

## (12) EUROPEAN PATENT APPLICATION

(21) Application number: **81300085.8**

(22) Date of filing: **09.01.81**

(51) Int. Cl.³: **F 16 J 15/34**

(30) Priority: **14.02.80 GB 8005004**

(43) Date of publication of application: **09.09.81**
**Bulletin 81/36**

(84) Designated Contracting States: **BE DE FR GB IT NL SE**

(71) Applicant: **Flexibox Litimed, Nash Road Trafford Park, Manchester M17 1SS (GB)**

(72) Inventor: **Wallace, Neil McIntosh, Nash Road Trafford Park, Manchester M17 1SS (GB)**

(74) Representative: **Bray, Lilian Janet et al, MARKS & CLERK Scottish Life House Bridge Street, Manchester M3 3DP (GB)**

(54) A mechanical seal incorporating a secondary seal for a rotary shaft.

(57) A seal comprising first and second seal portions (4 and 5) each having a seal element (9 and 29 respectively) for location around the shaft (1). The second seal portion (5) is adapted for rotation with the shaft (1) and is resiliently loaded (as at 32) to cause a face (31) of the second seal element (29) to abut a face (30) of the first seal element (9) to form a running seal, in use. An intermediate member (6) is located between the first and second seal portions (4 and 5) so that removal of the first seal element (9) from abutment with the second seal element (29) enables the second seal portion (5) to move under the influence of the resilient loading (32) into abutment with the intermediate member (6) to form a secondary seal whilst the shaft (1) is stationary.

1.

A MECHANICAL SEAL.

The present invention relates to mechanical seals.

When mechanical seals are used for sealing tanks and pressure vessels, for example to enable a paddle to be located within the tank or vessel and driven by a motor exterior to the tank or vessel, then if any of the seal parts have to be replaced it is usually necessary in the case of side or bottom entry tanks and vessels to drain the latter before stripping down the seal. This draining operation is costly in time and in the equipment necessary to carry it out.

The object of the present invention is to provide a novel mechanical seal which can be used for sealing tanks and pressure vessels yet which obviates the need to drain the tank or vessel or incorporate an expensive auxiliary

2.

sealing device for certain types of repair or replacement work to the seal.

According to the present invention there is provided a mechanical seal for a rotary shaft comprising first and second seal portions each comprising a seal element for location around the shaft, the second seal portion being adapted for rotation with the shaft and being resiliently loaded for causing a face of the second seal element to abut a face of the first seal element to form a running seal, in use, on rotation of the shaft, an intermediate member being located between the first and second seal portions whereby removal of the first seal element from abutment with the second seal element enables the second seal portion to move under the influence of the resilient loading into abutment with the intermediate member to form a secondary seal, in use, whilst the shaft is stationary.

Preferably, the intermediate member comprises an annular face covered by an annular gasket against which the second seal portion can abut to form the secondary seal.

Preferably also, the first seal portion is in sealing contact with the intermediate member and the relative dimensions of the seal are arranged such that, on removal of the first seal element from abutment with the second seal element, the secondary seal is formed before sealing contact

3.

is lost between the first seal portion and the intermediate member.

The present invention will now be described by way of example with reference to the accompanying drawing, in which:-

Fig. 1 is a longitudinal cross-sectional view of part of a mechanical seal according to the present invention showing the disposition of the seal when in use sealing a rotary shaft; and

Fig. 2 is a view similar to Fig. 1 but showing the disposition of the seal when a first seal portion thereof has been moved out of abutment with a second seal portion.

The drawing shows a mechanical seal arrangement for a side entry tank in which a paddle (not shown) is located. The paddle is attached to a rotary shaft 1 which passes out of the tank through an apeture 2 with a rim defining a flange 3. Exteriorly of the tank, the shaft 1 is attached to a motor (not shown) for driving the paddle.

The mechanical seal comprises a first seal portion 4, which remains stationary relative to the shaft 1 on rotation thereof and which is adapted to be bolted to the flange 3, a second seal portion 5 which is adapted to be secured to the shaft 1 to rotate therewith, and an intermediate member 6 which is disposed between the first and

4.

second seal portions 4 and 5 and which is also adapted to be secured to the flange 3.

The first seal portion 4 comprises an annular plate 7 which is located around the shaft 1 and which defines a tapering or frusto-conical aperture 8 through which the shaft 1 passes. The plate 7 is provided with a plurality of holes (not shown) whereby the plate 7 can be bolted to the flange 3 of the tank. Between the plate 7 and the shaft 1 is located a seal element 9 which comprises a wearing component such as a carbon annulus or other alternative wearing material with an inner cylindrical face 10 adjacent the shaft 1 and an outer tapering face 11 which cooperates with the face of the aperture 8 in the plate 7. The seal element 9 is longitudinally split into two pieces for ease of location around the shaft 1 and it will be appreciated that the cooperation between the tapering surfaces 8 and 11 of the plate 7 and the element 9 enables the element 8 to be pushed into and retained in position around the shaft 1 by the plate 7.

The outer portion of the plate 7 is recessed as at 12 to locate the intermediate member 6 which fits into the recessed portion 12 of the plate 7. The intermediate member 6 is also provided with an annular lip 13 which fits into an annular recess 14 in the flange 3 and the member 6 is screwed to the flange 3 by means of a plurality of screw bolts 15 which engage in tapped holes 16 located

5.

around the periphery of the member 6. The heads
17 of the bolts 15 are housed within holes 18
located in the plate 7 which holes 18 provide
access to the heads 17 and are provided in positions in the plate 7 which match with those of the
holes 16. To ensure a fluid-tight sealing connection between the intermediate member 6 and the
plate 7, the plate 7 is provided with an annular
groove 19 on a surface of the recessed portion 12
parallel with the surface of the shaft 1 in which
groove 19 is located an O-ring seal 20. The O-
ring 20 is in contact with an adjacent portion
of the member 6 which fits into the recessed
portion 12 and prevents leakage of fluid from the
tank between the member 6 and the first seal portion 4. To prevent leakage of fluid from the
tank between the flange 3 and the intermediate
member 6, the member 6 is provided with an annular
gasket 21 which lies against the end face 22 of the
member 6 and is clamped between the flange 3 and
the member 6, the screw 15 passing through the
gasket 21. The gasket 21 is made so that the edge
23 of the gasket defining the central aperture of
the gasket 21 overlies the rim 24 of the the intermediate member 6 which rim 24 also defines the
central aperture through which the shaft 1 passes.

The second seal portion 5 of the seal comprises an annular sleeve 25 which is closely fitted
around the shaft 1. The sleeve 25 is provided
with a groove 26 in which is fitted an O-ring 27
which seals the seal portions to the shaft 1.

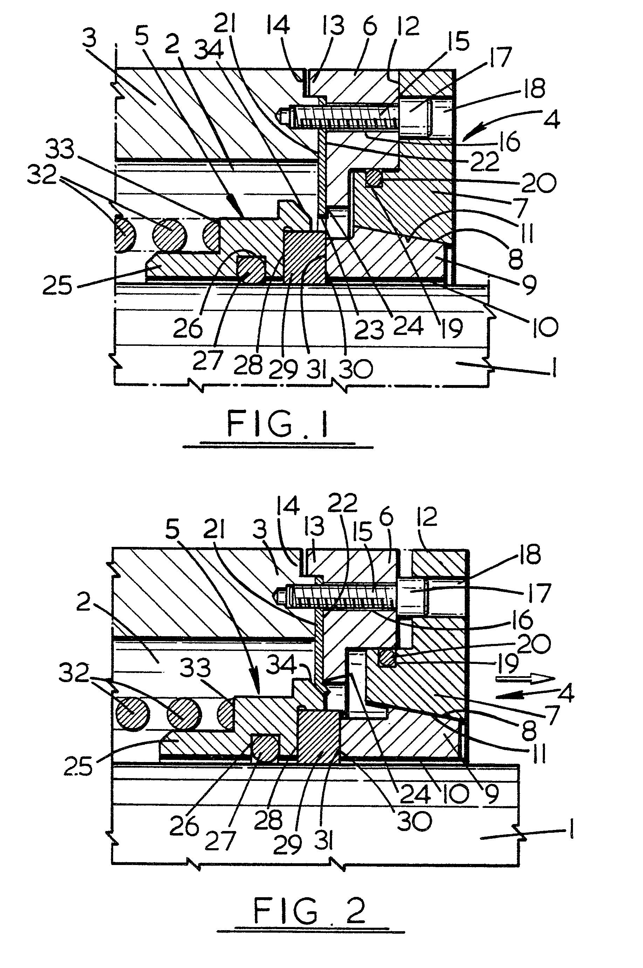

The end of the sleeve 25 adjacent the seal element 9 is recessed as at 28 and a second annular seal element 29 is shrink fitted into the recess 28 to seal and rotate therewith. Hence the sleeve 25 and the seal element 29 effectively form a single seal member. The adjacent end faces 30 and 31 of the first and second seal elements 9 and 29 respectively abut one another when the seal is ready for use with a rotating shaft as shown in Fig. 1. The second seal portion 5 is adapted to rotate with the shaft 1 whereas the first seal portion remains stationary with respect to the shaft 1 so that the first seal element 9 runs on the second seal element 29 to form a running seal when the shaft 1 rotates.

In order to ensure a good sealing connection between the sealing faces 30 and 31 of the elements 9 and 29, the faces 30 and 31 are lapped to a high degree of flatness and the second seal element 29 is resiliently loaded against the first element 9 by means of a spring 32. The spring 32 is wound around the shaft 1 and bears at one end against a shoulder 33 formed on the sleeve 25 and at its other end against a collar (not shown). The collar is secured to the shaft 1 so that the spring 32 as well as the sleeve 25 and the seal element 29 rotates with the shaft 1.

In use, the seal is assembled as shown in Fig. 1 so that the seal elements 9 and 29 abut one another, rotation of the shaft 1 causing the element 9 to run against the element 29 to form

7.

a running seal. As described above, the seal element 5 through the O-ring 27 seals against the shaft 1. The O-ring 20 and the gasket 21 additionally assist in the sealing of the arrangement to prevent leakage of fluid from the tank.

If it is desired to replace the stationary seal element 9, which with the correct choice of seal material sustains the running wear or remove the plate 7 for other reasons then the seal of the present invention can be partially dismantled without requiring the tank to be drained or the fitment of an expensive auxiliary sealing device. As shown in Fig. 2, if the plate 7 is disconnected from the flange 3 and slid together with the seal element 9 along the shaft 1 away from the rest of the seal, the spring load acting on the sleeve 25 causes it also to slide along the shaft 1 pushing along the seal element 29. The sleeve 25 moves along the shaft 1 until a tapered edge 34 formed adjacent the recess 28 abuts the rim 24 of the intermediate member trapping the edge of the gasket 21 and thus forming an annular seal around the shaft 1. Hence fluid is prevented from escaping from the tank by this secondary seal, which comes into operation on removal of the plate 7, and by the seal formed by the O-ring 27 which seals the sleeve 25 against the shaft 1.

It is important that before the secondary seal is formed no fluid leaks from the tank, hence it is

8.

important that the plate 7 remains in sealing
contact with the annular member 6 until the sleeve
25 abuts the rim 24. Thus, the O-ring 20 must
remain in contact with the member 6 as the plate
7 is slid away from the member 6 for a sufficient
distance until the secondary seal is formed and
the relative dimensions of the components of
the seal are important from this point of view.

Although the seal of the present invention
has been described in relation to the sealing
of tanks, it will be appreciated that the seal
can be used in other applications where the
provision of a secondary seal is necessary if the
seal is to be partially dismantled.

9.

CLAIMS

1. A mechanical seal for a rotary shaft comprising first and second seal portions each comprising a seal element for location around the shaft, the second seal portion being adapted for rotation with the shaft and being resiliently loaded for causing a face of the second seal element to abut a face of the first seal element to form a running seal, in use, on rotation of the shaft, characterised in that an intermediate member is located between the first and second seal portions whereby removal of the first seal element from abutment with the second seal element enables the second seal portion to move under the influence of the resilient loading into abutment with the intermediate member to form a secondary seal, in use, whilst the shaft is stationary.

2. A seal as claimed in claim 1, characterised in that the intermediate member comprises an annular face covered by an annular gasket against which the second seal portion can abut to form the secondary seal.

3. A seal as claimed in claim 1 or 2, characterised in that the first seal portion is in sealing contact with the intermediate member and the relative dimensions of the seal are arranged such that, on removal of the first seal element from abutment with the second seal element, the secondary seal is formed before sealing contact is lost between the first seal portion and the intermediate member.

4. A seal as claimed in claim 3, characterised in that an O-ring seal is interposed between the intermediate member and the first seal portion.

5. A seal as claimed in any one of claims 1 to 4, characterised in that the intermediate member is provided with an annular lip which is adapted to be fitted into an annular recess formed in a rim of a piece of equipment.

6. A seal as claimed in any one of claims 1 to 5, characterised in that the intermediate member and the first seal portion are adapted to be connected to a rim of a piece of equipment around which the seal is adapted to operate by the same connecting means.

7. A seal as claimed in any one of claims 1 to 6, characterised in that an O-ring seal is provided in the second seal portion to seal against the shaft in use of the seal.

8. A seal as claimed in any one of claims 1 to 7, characterised in that the first seal element forms a wearing component of the seal.

9. A seal as claimed in any one of claims 1 to 8, characterised in that the resilient loading comprises spring means adapted to be located around the shaft and to act on the second seal portion and

11.

a collar rigidly attached to the shaft.

10. A seal as claimed in any one of claims 1 to 9, characterised in that the first seal element comprises an annular element which is longitudinally split for fitment around the shaft and in that the second seal element comprises an annular element which is shrink-fitted to an annular sleeve adapted to fit closely around the shaft to make the second seal portion.

0035314

FIG. 1

FIG. 2

| Category | Citation of document with indication, where appropriate, of relevant passages | Relevant to claim |
|---|---|---|
| A | US - A - 3 339 929 (STAM) <br><br> * Column 1, line 41 to column 2, line 29; figure 1 * <br> --- | 1 |
| A | US - A - 2 917 330 (VANTA) <br><br> * Column 1, line 34 to column 3, line 12; figures 1 and 2 * <br><br> --------- | 1 |

## DOCUMENTS CONSIDERED TO BE RELEVANT

**CLASSIFICATION OF THE APPLICATION (Int. Cl.³)**

F 16 J 15/34

**TECHNICAL FIELDS SEARCHED (Int. Cl.³)**

F 16 J

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03.06.1981 | LEGER |

EPO Form 1503.1  06.78